# EUROPÄISCHE PATENTSCHRIFT

(11) **EP 0 814 922 B1**
(45) Veröffentlichungstag und Bekanntmachung des Hinweises auf die Patenterteilung: **05.12.2001**
(21) Anmeldenummer: 97900046.0
(22) Anmeldetag: 15.01.1997
(51) Int. Cl.: B21F 11/00, B23D 33/02, B23D 25/12

(54) **ANLAGE ZUM ABSCHNEIDEN MEHRERER DRAHTLÄNGEN VON EINEM DRAHTMATERIALSTRANG**
INSTALLATION FOR CUTTING OFF SEVERAL THREAD LENGTHS FROM A SKEIN OF THREAD MATERIAL
INSTALLATION POUR LE SECTIONNEMENT DE PLUSIEURS LONGUEURS DE FILS DANS UN ECHEVEAU DE FIL

(30) Priorität: 22.01.1996 AT 9896
(43) Veröffentlichungstag der Anmeldung: 07.01.1998
(73) Patentinhaber: EVG Entwicklungs- u. Verwertungs- Gesellschaft m.b.H., A-8074 Raaba (AT)
(72) Erfinder: RITTER, Klaus, A-8042 Graz (AT); RITTER, Gerhard, A-8043 Graz (AT); SCHERR, Rudolf, A-8045 Graz (AT)
(74) Vertreter: Holzer, Walter, Dipl.-Ing.
(86) Internationale Anmeldenummer: AT9700004
(87) Internationale Veröffentlichungsnummer: WO9727014

(56) Entgegenhaltungen:
- DE-A- 1 931 154
- DE-A- 2 900 013
- DE-A- 3 404 688

## Beschreibung

Die Erfindung betrifft eine Anlage zum Abschneiden mehrerer Drahtlängen von einem kontinuierlich vorgeschobenen, biegeelastischen Drahtmaterialstrang und zum Verteilen der abgetrennten Drahtlängen, mit einer Vorschubvorrichtung, Richtvorrichtungen, einer Schneidvorrichtung zum Abtrennen der Drahtlängen vom Drahtmaterialstrang, welche zwei in gegenläufigen Richtungen drehbare, gemeinsam antreibbare Scherenräder aufweist, und zwei Einschußkanälen zur Aufnahme der abgetrennten Drahtlängen.

Aus der US-3 916 662 ist eine Anlage zum Richten und Schneiden von Bewehrungsstäben für Stahlbeton sowie zum Sammeln einer bestimmten Anzahl dieser Bewehrungsstäbe bekannt. Die Schneidvorrichtung der Anlage weist zwei rotierende Schneidscheiben mit jeweils zwei Schneidmessern auf, wobei die Schneidscheiben zum Schneiden intermittierend angetrieben und stillgesetzt werden. Die abgelängten Bewehrungsstäbe werden durch eine der Schneidvorrichtung nachgeschaltete Verteilervorrichtung getrennt und einzeln abgelegt. Die Verteilervorrichtung der Anlage besteht im wesentlichen aus einem feststehenden, seitlich offenen Führungsblech, aus einem Lagergehäuse für eine drehbare, mit Versteifungsrippen versehene Hohlwelle, aus einer mit der Hohlwelle verbundenen, von einer Steuervorrichtung schrittweise ansteuerbaren Flügelscheibe sowie aus einem unten offenen Gehäuse, das zusammen mit den Versteifungsrippen der Hohlwelle mehrere Aufnahmekanäle für die zu verteilenden Stäbe bildet. Der Nachteil dieser bekannten Anlage besteht darin, daß die Schneidvorrichtung intermittierend arbeitet und daß zum Verteilen der Stäbe viele komplizierte und aufwendige mechanische Vorrichtungen sowie eine eigene Steuervorrichtung erforderlich sind.

Aus der DE-A1-1 931 154 ist eine Drahtschneidemaschine zum Abschneiden vorbestimmter Drahtlängen von einem von einer Vorratsrolle abgewickelten, kontinuierlich vorgeschobenen Draht bekannt. Hierbei wird der abzutrennende Draht in einen Aufnahmekanal vorgeschoben, der aus einem feststehenden, mit zwei seitlichen Aufnahmebehältern versehenen Abschlußglied und aus zwei unten offenen Nuten gebildet wird, die in einem seitlichen, in zwei verschiedene Stellungen beweglichen Aufnahmeglied angeordnet sind. Eine Betätigungsvorrichtung, die nach Zuführung einer vorbestimmten Drahtlänge in die den Draht aufnehmende Nut ausgelöst wird, bewirkt gleichzeitig sowohl eine Betätigung des Abschneidemessers zum Abtrennen des Drahtes vom Materialstrang als auch eine Verschwenkung des Aufnahmegliedes. Dadurch wird die abgeschnittene Drahtlänge in die Aufnahmebehälter abgeworfen und die andere Nut in die den folgenden Draht aufnehmende Stellung gebracht. Nachteilig erweist sich bei der geschilderten Konstruktion, daß eine aufwendige Steuerung sowie eine komplizierte mechanische Kopplung der einzelnen Komponenten der Abschneidemaschine erforderlich ist und daß der abzutrennende Draht in enge, lange Nuten eingeschoben werden muß.

Aus der AT-280 019 ist eine Vorrichtung zum Einschießen der Querdrähte bei einer Gitterschweißmaschine bekannt, die zwei sich über die gesamte Breite der Gitterschweißmaschine erstreckende, übereinander parallel verlaufende Querdrahtführungen, ein beiden Querdrahtführungen gemeinsames Einschießgetriebe sowie eine zwischen den beiden Querdrahtführungen und der Ausschußlinie des Einschießgetriebes angeordnete, verstellbare Drahtführungsweiche aufweist, wobei die Drahtführungsweiche alternativ mit einer der beiden Querdrahtführungen in Verbindung setzbar ist. Diese Vorrichtung hat den Nachteil, daß eine Verstellung der Drahtführungsweiche erforderlich ist. Eine Schneidvorrichtung wird in der AT-PS 280 019 nicht beschrieben.

Aus der DE-A1-29 00 013 ist schließlich ein Verfahren zum Ablenken von laufendem Walzgut aus der Zuführ-Bewegungsbahn in verschiedene, übereinanderliegende Ablauf-Bewegungsbahnen sowie eine rotierende Schere zur Durchführung des Verfahrens gemäß dem Oberbegriff des Anspruchs 1 bekannt. Hierbei werden aufeinanderfolgende Trennschnitte am Walzgut abwechselnd mit gegenüber dem Obermesser vorlaufendem Untermesser und mit gegenüber dem Obermesser nachlaufendem Untermesser durchgeführt. Die Schere weist zwei rotierende Scherenräder auf, die gemeinsam antreibbar sind. Die auf den Scherenrädern ausrückbar angeordneten Ober- und Untermesser werden je nach erforderlichem Schnitt in Arbeitsstellung gebracht bzw. in eine Ruheposition zurückgezogen. Der Nachteil dieser bekannten Anlage besteht darin, daß zum Ausrücken der Ober- und Untermesser in ihre Arbeitsstellung und umgekehrt zum Einziehen der Ober- und Untermesser in ihre Ruheposition entsprechende Stellantriebe erforderlich sind.

Aufgabe der Erfindung ist es, die geschilderten Nachteile der bekannten Ausführungen zu vermeiden und eine Anlage der einleitend angegebenen Art zu schaffen, die ohne großen Steuerungsaufwand und ohne bewegliche Teile ein rasch aufeinander folgendes Abtrennen vorbestimmter Drahtlängen vom kontinuierlich vorgeschobenen Materialstrang sowie ein Ablegen der abgetrennten Drahtlängen in verschiedene Vorratsbehälter ermöglicht. Die erfindungsgemäße Anlage hat die Merkmale, daß jedes Scherenrad zumindest je ein feststehendes Messer und eine Ablenkvorrichtung zum Ablenken des Anfangsstückes des Materialstranges aus dessen Vorschubbahn aufweist, wobei die Anfangsstücke und der nachfolgende Materialstrang abwechselnd in die außerhalb der Materialvorschubbahn im wesentlichen parallel zu dieser verlaufenden Einschußkanäle einschiebbar sind.

Gemäß einer bevorzugten Ausführungsform der Erfindung weist jedes Scherenrad als Ablenkvorrichtung an seinem Umfang eine Abweisnase auf, wobei die Abweisnasen in Drehrichtung der Scherenräder gesehen unmittelbar vor den Messern angeordnet und so ausgebildet sind, daß die Abweisnasen beim Schneidvorgang ihres nächstliegenden Messers in die Vorschubbahn des Materialstranges ragen.

Gemäß einer Weiterbildung der Erfindung ist jeder Einschußkanal von einem mit der Vorschubbahn des Materialstranges fluchtenden, beiden Einschußkanälen gemeinsamen, zentralen Klappenträger und von einer Reihe von mit Abstand zueinander angeordneten Einschießklappen gebildet, die um eine zur Vorschubbahn des Materialstranges parallele Achse seitlich wegschwenkbar ist.

Vorzugsweise weist jede Einschießklappe an ihrer dem zentralen Klappenträger zugewandten Seitenfläche eine Ausnehmung auf, wobei die Ausnehmungen einer Einschießklappen-Reihe je einen Einschußkanal bilden. Nach einem anderen Erfindungsmerkmal ist vorgesehen, daß zur Ablenkung des Materialstranges aus der Materialvorschubbahn in einer Ebene, die senkrecht zu der durch die Ablenkvorrichtung bewirkten Ablenkung liegt, die Ausnehmungen der ersten Einschießklappe zusammen mit zumindest einer weiteren, vorderen Einschießklappe einen Einlauftrichter je Einschußkanal bilden, wobei der obere Rand des Einlauftrichters oberhalb der Materialvorschubbahn und der Auslauf des Trichters unterhalb der Materialvorschubbahn liegt.

Erfindungsgemäß kann zum abwechselnden Auswerfen der abgetrennten Stäbe aus den Einschußkanälen mehrere heb- und senkbare, in die Zwischenräume zwischen den Einschießklappen einführbare Auswerfer vorgesehen sein und die ausgeworfenen Stäbe können einer nachgeschalteten Verarbeitungsanlage zuführbar sein.

Weitere Merkmale und Vorteile der Erfindung werden nachfolgend an einem Ausführungsbeispiel unter Bezugnahme auf die Zeichnungen näher erläutert. Es zeigen:
Fig. 1 eine Seitenansicht einer erfindungsgemäßen Anlage,
Fig. 2 eine Draufsicht der Anlage nach Fig. 1 und die
Fig. 3a - 3d die verschiedenen Arbeitsstellungen der Scherenräder.

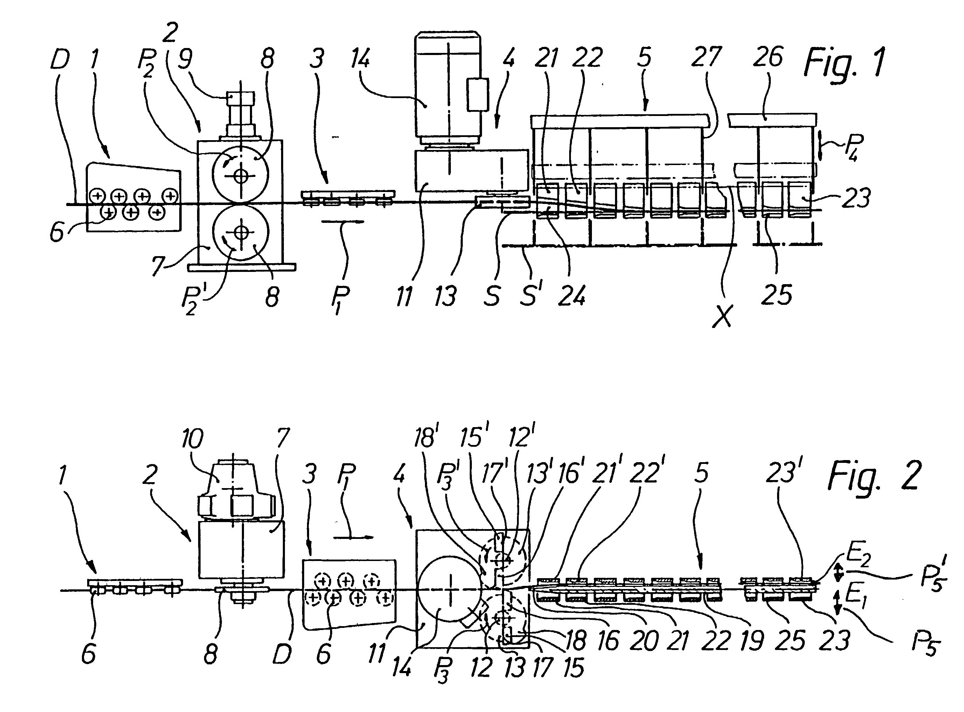

Die in den Fig. 1 und 2 dargestellte Anlage dient zum Abschneiden eines entsprechend dem Pfeil P1 kontinuierlich vorgeschobenen, biegeelastischen Drahtmaterialstranges D von einem endlosen Materialvorrat, der von einer Spule oder einem Haspelbund abgewickelt wird. Als biegeelastischer Drahtmaterialstrang kann beispielsweise Bewehrungsdraht mit glatter oder gerippter Oberfläche verwendet werden, wie er zur Herstellung von Bewehrungsgittermatten, Bewehrungsbügeln oder Bewehrungskörben dienen kann.

Die erfindungsgemäße Anlage weist in Vorschubrichtung P1 gesehen nacheinander eine vertikale Richtvorrichtung 1, eine Vorschubvorrichtung 2, eine horizontale Richtvorrichtung 3, eine Schneidvorrichtung 4 und eine Einschießvorrichtung 5 auf.

Die vertikale Richtvorrichtung 1 weist zwei gegenüberliegende Reihen von Dressurrollen 6 auf, wobei die Dressurrollen der einen Reihe versetzt zu den Dressurrollen der anderen Reihe angeordnet und zum Einstellen des Anpreßdruckes einzeln und/oder reihenweise relativ zueinander verstellbar sind. Die Achsen der Dressurrollen 6 verlaufen in horizontaler Richtung, so daß der durchlaufende Draht D durch die vertikale Richtvorrichtung 1 im wesentlichen in vertikaler Richtung geradegerichtet wird.

Die Vorschubvorrichtung 2 weist einen Getriebekasten 7 auf, der zwei einander gegenüberliegende Transportscheiben 8 trägt. Zumindest eine der Transportscheiben 8 wird mit Hilfe eines Anpreßzylinders 9 relativ zur anderen angestellt, um das Einfädeln des Drahtes D zu ermöglichen und um den zum schlupffreien Vorschub des Drahtes D erforderlichen Anpreßdruck zu erzeugen. Die Transportscheiben 8 sind mit einer Rändelung und/oder mit einer Führungsnut versehen, um den zum schlupffreien Vorschub erforderlichen Reibungsschluß zwischen den Transportscheiben 8 und dem Draht D zu gewährleisten. Ein Antriebsmotor 10 treibt die Transportscheiben 8 entsprechend den Pfeilen P2 und P2' jeweils gegenläufig an. Eine Transportscheibe ist mit einem Meßwertgeber zum Erfassen der durchlaufenden Drahtlänge versehen.

Die horizontale Richtvorrichtung 3 ist analog zur vertikalen Richtvorrichtung 1 aufgebaut und unterscheidet sich von dieser nur dadurch, daß die Achsen ihrer Dressurrollen 6 in vertikaler Richtung verlaufen, wodurch der durchlaufende Draht D in horizontaler Richtung geradegerichtet wird.

Die Schneidvorrichtung 4 weist einen Getriebeblock 11 mit zwei Antriebswellen 12, 12' auf. Mit der Antriebswelle 12 ist ein vorderes Scherenrad 13 und mit der Antriebswelle 12' ein hinteres Scherenrad 13' fest verbunden. Der Abstand zwischen den beiden Scherenrädern 13, 13' wird so groß gewählt, daß der Draht D mit dem größtmöglichen Durchmesser ungehindert zwischen den Scherenrädern hindurchtreten kann. Die Scherenräder 13, 13' werden über den zwischengeschalteten Getriebeblock 11 durch einen Scherenmotor 14 entsprechend den Pfeilen P3 und P3' jeweils gegenläufig angetrieben. Jedes Scherenrad 13, 13' weist zwei Messer 15 und 16 bzw. 15' und 16' auf, wobei die Schneidkanten 17 der Messer 15, 16 sowie die Schneidkanten 17' der Messer 15', 16' jeweils auf einer gemeinsamen Durchmesserlinie liegen. Das vordere Scherenrad 13 sowie das hintere Scherenrad 13' haben je eine Abweisnocke 18 bzw. 18', die jeweils an der Rückseite eines Messers 15 bzw. 16' angeordnet ist und bei entsprechender Stellung ihrer Scherenräder 13 bzw. 13' in die Vorschubbahn des zu durchtrennenden Drahtes D hineinragt.

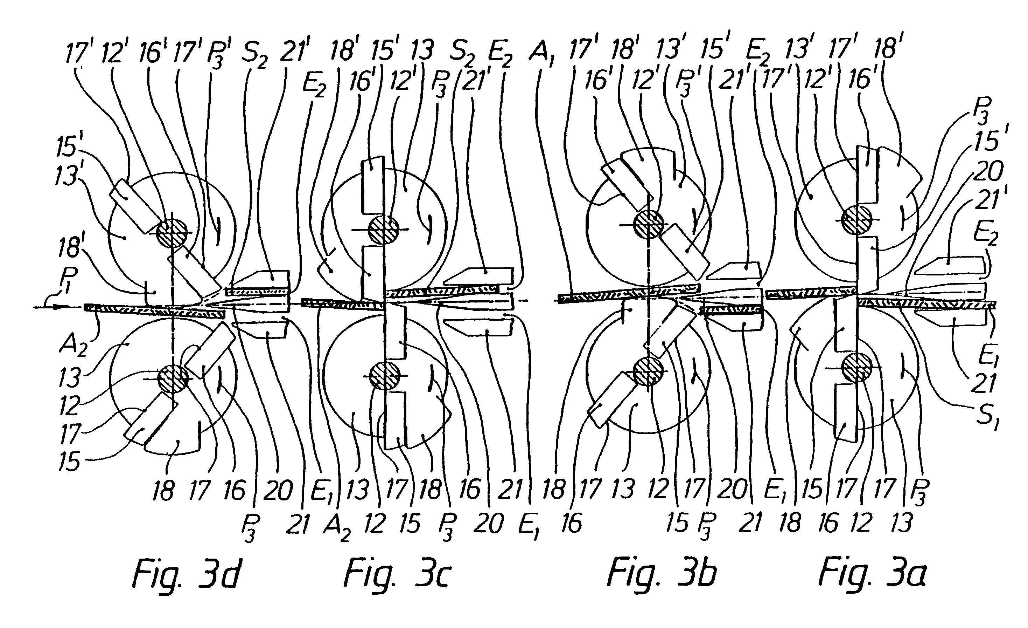

Die Einschießvorrichtung 5 weist einen Klappenträger 19 auf, dessen Mittellinie mit der Vorschubbahn des Drahtes D fluchtet. Der Klappenträger 19 hat eine keilförmig ausgebildete Einlaufspitze 20, die, wie die Fig. 3a bis 3d zeigen, möglichst weit in die von den Scherenrädern 13, 13' gebildete Austrittsöffnung ragt. An dem Klappenträger 19 sind seitlich zwei Reihen von Einschießklappen 21, 22, 23 bzw. 21', 22', 23' angeordnet, wobei jede Einschießklappenreihe um jeweils eine parallel zur Drahtvorschubbahn verlaufende Achse X entsprechend den Richtungen der Doppelpfeile P5, P5' schwenkbar ist. Jede Einschießklappe 21, 22, 23 bzw. 21', 22', 23' hat an der inneren, dem Klappenträger 19 zugewandten Seite eine Ausnehmung 24. Die Ausnehmungen 24 der Einschießklappen jeder Reihe sind derart gestaltet, daß zu beiden Seiten des Klappenträgers 19 je ein Einschußkanal E1 bzw. E2 zur Aufnahme des Drahtes D entsteht.

Wie Fig. 2 zeigt, verlaufen die Einschußkanäle E1 und E2 außermittig zur Vorschubbahn des Drahtes D. Gemäß Fig. 1 sind die Ausnehmungen 24 aller Einschießklappen 21, 22, 23 bzw. 21', 22', 23' jeder Reihe außerdem so ausgebildet, daß die Einschußkanäle E1,E2 trichterförmig sind. Die Einlaufseiten der oberen Begrenzungsflächen der Ausnehmungen 24 in den ersten Einschießklappen, den sogenannten Weichenklappen 21, 21' liegen jeweils oberhalb der Vorschubbahn des abzutrennenden Drahtes D, wodurch gewährleistet ist, daß der Draht D sicher in die Einschußkanäle E1 bzw. E2 einlaufen kann. Die unteren Begrenzungsflächen aller Ausnehmungen 24 liegen in einer Ebene, die unterhalb der Vorschubbahn der Drahtes D liegt, während die oberen Begrenzungsflächen der Ausnehmungen 24 der Weichenklappen 21,21' und der vorderen Einschießklappen 22, 22' in einer Ebene liegen, die einen spitzen Winkel mit der Ebene der unteren Begrenzungsflächen bildet. Die oberen Begrenzungsflächen der Ausnehmungen 24 in den übrigen Einschießklappen 23, 23' liegen in einer Ebene, die zur Ebene der unteren Begrenzungsflächen parallel verläuft.

Im Rahmen der Erfindung können je Reihe auch mehrere vordere Einschießklappen 22 bzw. 22' hintereinander angeordnet werden, wenn aufgrund der mechanischen Eigenschaften des zu verarbeitenden Drahtmaterialstranges D dieser nicht sehr stark aus der Vorschubbahn abgelenkt werden darf und daher die oberen Begrenzungsflächen der Ausnehmungen der vorderen Einschießklappen 22, 22' in einer Ebene mit einem extrem kleinen Winkel zur Ebene der unteren Begrenzungsflächen verlaufen müssen.

Alle Ausnehmungen 24 weisen an ihren der Schneidvorrichtung 4 zugewandten Einlaufseite einen entsprechend geformten Einlaufkonus 25 auf, der gewährleistet, daß das Drahtanfangsstück A1, A2 des abzutrennenden Drahtes D ungehindert in die entsprechende Einschießklappe einlaufen kann und nicht in den Zwischenräumen zwischen den einzelnen Einschießklappen hängenbleibt.

Die Einschießvorrichtung 5 hat einen Auswerferbalken 26, der zwei Reihen von entsprechend dem Doppelpfeil P4 in vertikaler Richtung bewegbaren, in die Zwischenräume der Einschießklappen 21, 22, 23 bzw. 21', 22', 23' einführbaren Auswerfern 27 trägt.

Die erfindungsgemäße Anlage arbeitet wie folgt: Der Draht D wird mit Hilfe der Vorschubvorrichtung 2 vom Drahtmaterialvorrat entsprechend dem Pfeil P1 kontinuierlich abgezogen und in der Richtvorrichtung 1 in vertikaler Richtung und in der Richtvorrichtung 3 in horizontaler Richtung geradegerichtet. Nach dem Verlassen der Richtvorrichtung 3 gelangt der Draht D in den Wirkungsbereich der Schneidvorrichtung 4 und wird mit Hilfe der Vorschubvorrichtung 2 zwischen den beiden Scherenrädern 13, 13' der Schneidvorrichtung 4 zunächst entlang seiner Vorschubbahn gerade und kontinuierlich hindurchgeschoben. An der Auslaufseite der Schneidvorrichtung 4 wird der Draht D von der Einlaufspitze 20 des Klappenträgers 19 aus seiner Vorschubbahn abgelenkt und in einen der beiden Einschußkanäle E1 oder E2 eingeschoben. Durch diese Ablenkung des Drahtes D im Einschußkanal E1 oder E2 muß der Draht D seine bisherige gerade Vorschubbahn verlassen und wird zwischen dem Klappenträger 19 und den Einschießklappen 21, 22, 23 auf einer leicht gekrümmten Vorschubbahn weitergeführt und damit leicht vorgespannt. Durch die Ausgestaltung der Ausnehmungen 24 in den Einschießklappen 21, 22, 23 wird der Draht D außerdem nach unten aus der geraden Drahtvorschubbahn abgelenkt und damit zusätzlich auch in vertikaler Richtung vorgespannt.

Sobald der vom Materialvorrat abgewickelte Draht D in der Schneidvorrichtung 4 seine zur Bildung eines Stabes S1 gewünschte Länge erreicht hat, werden die beiden Scherenräder 13, 13' derart in Drehung versetzt, daß die Umdrehungsgeschwindigkeit der Scherenräder 13, 13' annähernd der Vorschubgeschwindigkeit des Drahtes D entspricht und der Draht D von den Messern 15 bzw. 15' der Scherenräder 13 bzw. 13', wie in Fig. 3a dargestellt, vom weiterhin kontinuierlich vorgeschobenen Drahtmaterialstrang D abgetrennt wird. Nach dem Abtrennen des Stabes S1 vom Drahtmaterialstrang D entladen sich die beiden Vorspannungen im Stab S1 in der Weise, daß das Endstück des abgetrennten Stabes S1 sowohl nach vorne als auch nach unten federt, wodurch der gesamte Stab S1 rasch und vollkommen aus der Vorschubbahn des Drahtes D herausgedrückt wird und den Vorschubweg für das Anfangsstück A1 des nachfolgenden, im folgenden Arbeitsschritt abzutrennenden Drahtes freigibt.

Durch eine Weiterdrehung der Scherenräder 13, 13' in der gleichen Richtung wird das Anfangsstück A1 nunmehr von der Abweisnase 18 des vorderen Scherenrades 13 derart aus der Vorschubbahn nach hinten gedrückt, daß der Draht D in den Einschußkanal E2 einlaufen kann, wie dies Fig. 3b zeigt. Durch die Ablenkung des Drahtes D aus der Vorschubbahn wird auch dieser Draht vorgespannt. Durch die Ausgestaltung der Ausnehmungen 24 der Einschießklappen 21', 22', 23' wird der Draht D außerdem nach unten aus der Vorschubbahn abgelenkt und zusätzlich in vertikaler Richtung vorgespannt. Die Scherenräder 13, 13' werden in gleicher Richtung soviel weitergedreht, bis die Abweisnase 18 wieder außerhalb der Vorschubbahn des Drahtes D liegt.

Sobald die abgewickelte Drahtlänge in der Schneidvorrichtung 4 der gewünschten Länge des zweiten Stabes S2 entspricht, werden die Scherenräder 13, 13' zum Abtrennen dieses Stabes S2 wieder in entsprechende Drehung versetzt, wie beim Abtrennen des ersten Stabes S1, und der zweite Stab S2 wird vom weiterhin kontinuierlich vorgeschobenen Drahtmaterialstrang D abgetrennt. Beim Abtrennen entladen sich wiederum die beiden Vorspannungen im Stab S2 und das Ende des abgetrennten Stabes S2 verläßt vollständig die Drahtvorschubbahn, wie dies Fig. 3c zeigt, und gibt damit diese Vorschubbahn für das Anfangsstück A2 des nachfolgenden Drahtes D frei. Dieses Anfangsstück A2 wird nunmehr von der Abweisnocke 18' des hinteren Scherenrades 13' aus der Vorschubbahn des Drahtes D soweit nach vorne abgelenkt, daß das Anfangsstück A2, wie in Fig. 3d dargestellt, in den Einschußkanal E1 einlaufen kann.

Auf diese Weise werden ohne Unterbrechung des kontinuierlichen Vorschubes des Drahtmaterialstranges D abwechselnd die Einschußkanäle E1 und E2 mit dem abzutrennenden Draht D beschickt. Durch geeignete Maßnahmen, wie beispielsweise Endanschläge am Ende der Einschußkanäle E1, E2 oder auch Abbremsvorrichtungen in den Einschußkanälen E1, E2 werden die abgetrennten Stäbe S, S1, S2 abgestoppt und anschließend quer zu ihrer Längsrichtung von den Auswerfern 27 einzeln und abwechselnd aus den Einschußkanälen E1, E2 ausgeworfen und einer nachgeschalteten Verarbeitungsanlage, wie beispielsweise einer Schweißmaschine zum Herstellen von Drahtgittermatten zugeführt. Zum Auswerfen der abgetrennten Stäbe S, S1, S2 werden die entsprechenden Einschießklappen 21, 22, 23 bzw. 21', 22', 23' in den entsprechenden Richtungen des Doppelpfeiles P5 bzw. P5' um die Achse X von dem feststehenden Klappenträger 19 weggeschwenkt. Nach dem Auswerfen der Stäbe S, S1, S2 schwenken die Einschießklappen 21, 22, 23 bzw. 21', 22', 23' in ihre Ausgangslage zurück. Hierbei können die ausgeworfenen Stäbe S' im Rahmen der Erfindung entweder direkt oder über ein Zwischenmagazin oder auch über eine Verteilervorrichtung der Schweißmaschine zugeführt werden. In der Verteilervorrichtung können die Stäbe bearbeitet werden, beispielsweise durch Umbiegen zumindest eines Endes der Stäbe S' zu Endhaken oder Schlaufen. Zum Messen der abzutrennenden Drahtlängen und zum Ansteuern der Transportscheiben 8 der Vorschubvorrichtung 2, der Scherenräder 13, 13' der Schneidvorrichtung 4 und der Auswerfer 27 ist eine geeignete Meß- und Steuervorrichtung vorgesehen.

Es versteht sich, daß das dargestellte Ausführungsbeispiel im Rahmen des allgemeinen Erfindungsgedankens verschiedentlich, insbesondere hinsichtlich der Ausgestaltung der Schneidvorrichtung, abgewandelt werden kann. Es können alle Typen von Schneidvorrichtungen Anwendung finden, die gewährleisten, daß die Drahtlängen ohne Unterbrechung des kontinuierlichen Vorschubes des Drahtmaterialstranges D von diesem abgetrennt und durch geeignete Maßnahmen die Anfangsstücke des Drahtes D abwechselnd in die beiden Einschußkanäle E1, E2 eingeführt werden.

Bei der Verwendung von Scherenrädern in der Schneidvorrichtung können im Rahmen der Erfindung sowohl nur ein Messer als auch zwei oder mehr Messer pro Scherenrad vorgesehen sein. Mehrere Messer werden vor allem zum Abschneiden kurzer Drahtlängen und bei hoher Vorschubgeschwindigkeit des Materialstranges eingesetzt.

Des weiteren ist es im Rahmen der Erfindung möglich, in den Einschußkanälen E1 und E2 zusätzlich Transportvorrichtungen vorzusehen, wenn es aufgrund zu großer Reibungskräfte in den Einschußkanälen erforderlich sein sollte, die abgetrennten Stäbe rascher als dies aufgrund ihres Bewegungsimpulses vorgegeben ist, in ihrer Längsrichtung vorzuschieben und damit rascher aus der Vorschubbahn des Materialstranges herauszubefördern.

## Patentansprüche

1. Anlage zum Abschneiden mehrerer Drahtlängen von einem kontinuierlich vorgeschobenen, biegeelastischen Drahtmaterialstrang und zum Verteilen der abgetrennten Drahtlängen, mit einer Vorschubvorrichtung, Richtvorrichtungen, einer Schneidvorrichtung zum Abtrennen der Drahtlängen vom Drahtmaterialstrang, welche zwei in gegenläufigen Richtungen drehbare, gemeinsam antreibbare Scherenräder aufweist, und zwei Einschußkanälen zur Aufnahme der abgetrennten Drahtlängen, **dadurch gekennzeichnet, daß** jedes Scherenrad (13, 13') zumindest je ein feststehendes Messer (15, 15', 16, 16') und eine Ablenkvorrichtung (18, 18') zum Ablenken des Anfangsstückes (A1, A2) des Materialstranges (D) aus dessen Vorschubbahn aufweist, wobei die Anfangsstücke (A1, A2) und der nachfolgende Materialstrang (D) abwechselnd in die außerhalb der Materialvorschubbahn im wesentlichen parallel zu dieser verlaufenden Einschußkanäle (E1, E2) einschiebbar sind.

2. Anlage nach Anspruch 1, **dadurch gekennzeichnet, daß** jedes Scherenrad (13, 13') als Ablenkvorrichtung an seinem Umfang eine Abweisnase (18, 18') aufweist, wobei die Abweisnasen (18, 18') in Drehrichtung der Scherenräder (13, 13') gesehen unmittelbar vor den Messern (15; 16') angeordnet und so ausgebildet sind, daß die Abweisnasen (18, 18') beim Schneidvorgang ihres nächstliegenden Messers (15, 16') in die Vorschubbahn des Materialstranges (D) ragen.

3. Anlage nach Anspruch 1 oder 2, **dadurch gekennzeichnet, daß** jeder Einschußkanal (E1; E2) von einem mit der Vorschubbahn des Materialstranges (D) fluchtenden, beiden Einschußkanälen (E1, E2) gemeinsamen, zentralen Klappenträger (19) und von einer Reihe von mit Abstand zueinander angeordneten Einschießklappen (21, 22, 23; 21', 22', 23') gebildet ist, die um eine zur Vorschubbahn des Materialstranges parallele Achse (X) seitlich wegschwenkbar (P5, P5') ist.

4. Anlage nach Anspruch 3, **dadurch gekennzeichnet, daß** der Klappenträger (19) an seinem der Schneidvorrichtung (4) zugewandten Ende eine keilförmig ausgebildete Einlaufspitze (20) aufweist, die in die durch die Scherenräder (13, 13') der Schneidvorrichtung (4) gebildete Austrittsöffnung hineinragt.

5. Anlage nach einem der Ansprüche 1 bis 4, **dadurch gekennzeichnet, daß** jede Einschießklappe (21, 21', 22, 22', 23, 23') an ihrer dem zentralen Klappenträger (19) zugewandten Seitenfläche eine Ausnehmung (24) aufweist, wobei die Ausnehmungen (24) einer Einschießklappen-Reihe je einen Einschußkanal (E1; E2) bilden.

6. Anlage nach einem der Ansprüche 1 bis 5, **dadurch gekennzeichnet, daß** zur Ablenkung des Materialstranges (D) aus der Materialvorschubbahn in einer Ebene, die senkrecht zu der durch die Ablenkvorrichtung (18, 18') bewirkten Ablenkung liegt, die Ausnehmungen (24) der ersten Einschießklappe (21, 21') zusammen mit zumindest einer weiteren, vorderen Einschießklappe (22, 22') einen Einlauftrichter je Einschußkanal (E1; E2) bilden, wobei der obere Rand des Einlauftrichters oberhalb der Materialvorschubbahn und der Auslauf des Trichters unterhalb der Materialvorschubbahn liegt.

7. Anlage nach Anspruch 6, **dadurch gekennzeichnet, daß** zur Bildung von trichterförmig ausgebildeten Einschußkanälen (E1, E2) die unteren Begrenzungsflächen der Ausnehmungen (24) aller Einschießklappen (21, 21', 22, 22', 23, 23') in einer zur Materialvorschubbahn parallelen, jedoch außerhalb derselben liegenden Ebene liegen, daß die oberen Begrenzungsflächen der Ausnehmungen (24) der einlaufseitig angeordneten Einschießklappen (21, 21', 22, 22') in einer Ebene liegen, die einen spitzen Winkel mit der Ebene der unteren Begrenzungsflächen bildet, und daß die oberen Begrenzungsflächen der übrigen Einschießklappen (23, 23') in einer zur Ebene der unteren Begrenzungsflächen parallelen Ebene liegen.

8. Anlage nach einem der Ansprüche 5 bis 7, **dadurch gekennzeichnet, daß** die Ausnehmungen (24) jeder Einschießklappe (21, 21', 22, 22', 23, 23') an ihrer Einlaufseite einen Einlaufkonus (25) aufweisen.

9. Anlage nach einem der Ansprüche 1 bis 8, **dadurch gekennzeichnet, daß** zum abwechselnden Auswerfen der abgetrennten Stäbe (S, S1, S2) aus den Einschußkanälen (E1, E2) mehrere hebund senkbare, in die Zwischenräume zwischen den Einschießklappen (21, 21', 22, 22', 23, 23') einführbare Auswerfer (27) vorgesehen sind und daß die ausgeworfenen Stäbe (S') einer nachgeschalteten Verarbeitungsanlage zuführbar sind.

## Claims

1. Installation for cutting off several wire lengths from a continuously advanced, bend-elastic wire material strand and for distributing the severed wire lengths, having an advancing device, directing devices, a cutting device for severing the wire lengths from the wire material strand, which cutting device has two jointly driven shearing wheels rotatable in opposite directions, and two shoot-in shoot-in channels for receiving the severed wire lengths, **characterised in that** each severing wheel (13, 13') has at least one fixed cutting blade (15, 15', 16, 16') and a deflecting device (18, 18') for deflecting the leading piece (A1, A2) of the material strand (D) from its advancing path, wherein the leading pieces (A1, A2) and the subsequent material strand (D) are alternately insertable in the shoot-in shoot-in channels (E1, E2) running outside the material advancing path essentially parallel to the same.

2. Installation according to claim 1, **characterised in that** each severing wheel (13, 13') has on its periphery a diverting lug (18, 18'), wherein the diverting lugs (18, 18') are arranged directly in front of the cutting blades (15; 16'), when viewed in the direction of rotation of the shearing wheels, and so constructed that the diverting lugs (18, 18') during the cutting process of its nearest cutting blade (15, 16') project into the advancing path of the material strand (D).

3. Installation according to claim 1 or 2, **characterised in that** each shoot-in channel (E1; E2) is formed by a central flap carrier (19), common to both shoot-in channels (E1, E2), which merges with the advancing path of the material strand (D), and a row of shoot-in flaps (21, 22, 23; 21', 22', 23') arranged at intervals to each other and which is pivotable laterally outwards (P5, P5') about an axis (X) running parallel to the advancing path of the material strand.

4. Installation according to claim 3, **characterised in that** the flap carrier (19) at its end facing the cutting device (4) has a wedge-shaped lead-in point (20) which projects into the outlet opening formed by the shearing wheels (13, 13').

5. Installation according to one of the claims 1 to 4, **characterised in that** each shoot-in flap (21, 21', 22, 22', 23, 23') has a recess (24) in its side facing the central flap carrier (19), wherein the recesses (24) of one row of shoot-in flaps in each case form one shoot-in channel (E1; E2).

6. Installation according to one of the claims 1 to 5, **characterised in that** for deflecting the material strand (D) from the material advancing path in a plane which lies perpendicular to the deflection effected by the deflection device (18, 18') the recesses (24) of the first shoot-in flap (21, 21') together with at least one further leading shoot-in flap (22, 22') form one lead-in funnel per shoot-in channel (E1; E2), wherein the top edge of the lead-in funnel lies above the material advancing path and the outlet of the funnel is situated below the material advancing path.

7. Installation according to claim 6, **characterised in that** for forming funnel-like shoot-in channels (E1, E2) the lower delimiting surfaces of the recesses (24) of all shoot-in flaps (21, 21', 22, 22', 23, 23') are situated in a plane parallel to the material advancing path but lying outside the same, that the upper delimiting surfaces of the recesses (24) of the shoot-in flaps (21, 21', 22, 22') arranged on the lead-in side are situated in a plane which forms an acute angle with the plane of the lower delimiting surfaces, and that the upper delimiting surfaces of the remaining shoot-in flaps (23, 23') are situated in a plane running parallel to the plane of the lower delimiting surfaces.

8. Installation according to one of the claims 5 to 7, **characterised in that** the recesses (24) of each shoot-in flap (21, 21', 22, 22', 23, 23') have a lead-in cone (25) on their lead-in side.

9. Installation according to one of the claims 1 to 8, **characterised in that** for the alternating ejection of the severed rods (S, S1, S2) from the shoot-in channels (E1, E2) a plurality of ejectors (27), which can be raised and lowered, are provided for introduction into the intermediate spaces between the shoot-in flaps (21, 21', 22, 22', 23, 23') and that the ejected rods (S') can be fed to a subsequent processing machine.

## Revendications

1. Installation pour le sectionnement de plusieurs longueurs de fils dans un écheveau de fils souple et élastique, amené en continu et pour la répartition des longueurs de fils séparées, avec un dispositif d'amenée, des dispositifs redresseurs, un dispositif de coupe pour la séparation des longueurs de fils de l'écheveau de fils, qui présente deux roues de coupe pouvant être entraînées en commun, rotatives dans des directions opposées, et deux canaux d'introduction pour la réception des longueurs de fils séparées, **caractérisée en ce que** chaque roue de coupe (13,13') présente au moins chaque fois une lame stationnaire (15,15',16,16') et un dispositif de déviation (18,18') pour faire dévier le tronçon de départ (A1,A2) de l'écheveau de fils (D) à partir de sa voie d'amenée, moyennant quoi les tronçons de départ (A1,A2) et l'écheveau consécutif (D) peuvent être introduits en alternance dans les canaux d'introduction (E1,E2) à l'extérieur de la voie d'amenée et s'étendant sensiblement parallèlement à celle-ci.

2. Installation selon la revendication 1, **caractérisée en ce que** chaque roue de coupe (13,13') présente en tant que dispositif de déviation un bec de déviation ou déflection (18,18') sur sa périphérie, les becs de déflection (18,18') étant disposés, comme cela est vu dans la direction de rotation des roues de coupe (13,13'), directement en amont des lames (15;16') et étant conçus de telle sorte que les becs de déflection (18,18') lors de l'opération de coupe de leur lame la plus proche (15,16') font saillie dans la voie d'amenée de l'écheveau de fils (D).

3. Installation selon la revendication 1 ou 2, **caractérisé en ce que**, chaque canal d'introduction (E1;E2) est formé par un porte clapet (19) central, commun aux deux canaux d'introduction (E1,E2), en alignement avec la voie d'amenée de l'écheveau (D) et par une série de clapets d'introduction (21,22,23;21',22',23') disposés à une certaine distance entre eux, qui sont basculants latéralement (P5,P5') autour d'un axe (X) parallèle à la voie d'amenée de l'écheveau.

4. Installation selon la revendication 3, **caractérisée en ce que** le porte clapet (19) présente sur son extrémité dirigée vers le dispositif de coupe (4) une pointe d'entrée (20) conçue en forme de coin et qui fait saillie dans l'ouverture de sortie formée par les roues de coupe (13,13') du dispositif de coupe (4).

5. Installation selon l'une des revendications 1 à 4, **caractérisée en ce que** chaque clapet d'introduction (21,21',22,22',23,23') présente un évidement (24) sur sa face latérale dirigée vers le porte- clapet central (19), moyennant quoi les évidements (24) d'une série de clapets d'introduction forment chaque fois un canal d'introduction (E1;E2).

6. Installation selon l'une des revendications 1 à 5, **caractérisée en ce que** pour la déviation ou déflection de l'écheveau de fils (D) en provenance de la voie d'amenée dans un plan, qui se situe perpendiculairement à la déflection exercée par le dispositif de déflection (18,18'), les évidements (24) du premier clapet d'introduction (21,21') forment conjointement avec au moins un autre clapet d'introduction antérieur (22,22') un entonnoir d'entrée par canal d'introduction (E1;E2), moyennant quoi le bord supérieur de l'entonnoir d'entrée se situe au-dessus de la voie d'amenée et la sortie de l'entonnoir se situe au-dessous de la voie d'amenée.

7. Dispositif selon la revendication 6, **caractérisée en ce que** pour la formation de canaux d'introduction en forme d'entonnoir (E1,E2), les faces de limitation inférieures des évidements (24) de tous les clapets d'introduction (21,21',22,22',23,23') se situent dans un plan parallèle à la voie d'amenée de l'écheveau, toutefois à l'extérieur de celle-ci, **en ce que** les faces de limitation supérieures des évidements (24) des clapets d'introduction (21,21',22,22') disposés sur le côté entrée se situent dans un plan qui forme un angle aigu avec le plan des faces de limitation inférieures, et **en ce que** les faces de limitation supérieures des autres clapets d'introduction (23,23')se situent dans un plan parallèle au plan des faces de limitation inférieures.

8. Installation selon l'une des revendications 5 à 7, **caractérisée en ce que** les évidements (24) de chaque clapet d'introduction (21,21',22,22',23,23') présentent un cône d'entrée (25) sur leur côté entrée.

9. Installation selon l'une des revendications 1 à 8, **caractérisée en ce que** pour l'éjection alternée des tronçons séparés (S,S1,S2) hors des canaux d'introduction (E1,E2) sont prévus plusieurs éjecteurs (27) relevables et abaissables, pouvant être introduits dans les espaces intermédiaires entres les clapets d'introduction (21,21',22,22',23,23') et **en ce que** les tronçons éjectés (S') peuvent être amenés à une installation de traitement située en aval.
